# EUROPEAN PATENT APPLICATION

(11) **EP 2 098 824 A1**
(43) Date of publication of application: **09.09.2009**
(21) Application number: 07860053.3
(22) Date of filing: 25.12.2007
(51) Int. Cl.: G01C 21/00, G08G 1/0969

(54) **DRIVING ASSISTANCE DEVICE**

(30) Priority: 26.12.2006 JP 2006350268
(71) Applicant: Toyota Jidosha Kabushiki Kaisha, Toyota-shi Aichi 471-8571 (JP)
(72) Inventor: SEKIYAMA, Hiroaki, Toyota-shi Aichi 471-8571 (JP); IMAI, Hiroyuki, Toyota-shi Aichi 471-8571 (JP)
(74) Representative: Intes, Didier Gérard André
(86) International application number: PCT/JP2007/074824
(87) International publication number: WO 2008/081775

(57) **Abstract**

A drive assistance device for reporting to a driver whether passage time at a point is earlier or later than reference time is disclosed. The drive assistance device is configured to detect positions of a vehicle; to record the detected positions in association with passage time at the respective detected positions; to determine whether the vehicle is running a regular route; and if the vehicle is running a regular route, to report to the driver whether current passage time at a given point on the regular route is earlier or later than previous passage time at the given point. The drive assistance device also obtains traffic jam information on a part of the regular route from the given point to a destination of the regular route and reports the traffic jam information to the driver when the vehicle passes the given point.

## Description

### TECHNICAL FIELD

The present invention generally relates to a drive assistance device for reporting to a driver whether passage time at a given point is earlier or later than reference time. More particularly, the present invention relates to a drive assistance device with improved user convenience.

### BACKGROUND ART

There are known devices or systems that report to a driver whether passage time at a given point (time when a vehicle passes the given point) is earlier or later than reference time (see, for example, patent documents 1 and 2).

Patent document 1 discloses a device that detects the location of a fixed-route bus, determines whether the bus has passed a bus stop, compares actual passage time and scheduled time at the bus stop, and reports lead time or delay time to the bus driver.

Patent document 2 discloses a system that calculates desired passage time at a given point which must be kept to arrive at a destination at scheduled arrival time based on the destination and the scheduled arrival time set by a user and the current position and speed of a vehicle, compares the desired passage time with actual passage time, and prompts the driver to accelerate the vehicle if the actual passage time is later than the desired passage time.

[Patent document 1] Japanese Patent Application Publication No. 2004-252568

[Patent document 2] Japanese Patent Application Publication No. 2004-287856

### DISCLOSURE OF INVENTION

### PROBLEMS TO BE SOLVED BY THE INVENTION

The device disclosed in patent document 1 is designed for a fixed route bus that runs a fixed route according to a fixed schedule and is therefore not applicable to a general-purpose automobile the route and schedule of which are not fixed.

The system disclosed in patent document 2 requires the user to set a destination and desired arrival time. However, when driving a regular route such as a commuting route, the user may not always set the destination. With the system disclosed in patent document 2, the user has to set a destination and desired arrival time each time even when driving a regular route. This is inconvenient for the user.

One object of the present invention is to solve or reduce one or more problems caused by the limitations and disadvantages of the background art and to provide a drive assistance device with improved user convenience.

### MEANS FOR SOLVING THE PROBLEMS

An aspect of the present invention provides a drive assistance device for reporting to a driver whether passage time at a point is earlier or later than reference time. The drive assistance device is configured to detect positions of a vehicle; to record the detected positions in association with passage time at the respective detected positions; to determine whether the vehicle is running a regular route; and if the vehicle is running the regular route, to report to the driver whether current passage time at a given point on the regular route is earlier or later than previous passage time at the given point.

According to an aspect of the present invention, a regular route is determined based on movement history of the vehicle and indicates a route that is taken by the vehicle at a predetermined frequency or higher. For example, a route taken by the vehicle a predetermined number of times or more within a predetermined period is determined as a regular route. Also, days of the week may be taken into account when determining a regular route. In this case, a route taken by the vehicle a predetermined number of times or more in a certain time range on the same day of the week during a predetermined period is determined as a regular route.

According to an aspect of the present invention, a vehicle is determined to be running a regular route if the vehicle passes two or more points on the regular route, if the vehicle passes a point on the regular route during a predetermined time range before or after previous passage time, or if the vehicle passes a point on the regular route during a predetermined time range before or after previous passage time on the same day of the week.

According to an aspect of the present invention, points passed by the vehicle and the corresponding passage time are recorded as movement history. When a driver is driving a frequently-used route, the drive assistance device can report to the driver whether current passage time at a given point is earlier or later than previous passage time recorded in the movement history without requiring the driver to set a destination and desired arrival time. This makes it possible to improve user convenience.

According to an aspect of the present invention, the drive assistance device is configured to obtain traffic jam information on a part of the regular route from the given point to a destination of the regular route and to report also the traffic jam information to the driver when the vehicle passes the given point.

### ADVANTAGEOUS EFFECT OF THE INVENTION

Embodiments of the present invention make it possible to provide a drive assistance device with improved user convenience.

### BRIEF DESCRIPTION OF THE DRAWINGS

FIG. 1 is a schematic diagram of a drive assistance device according to an embodiment of the present invention; and
FIG. 2 is a flowchart showing a reporting process performed by a drive assistance device according to an embodiment of the present invention.

### EXPLANATION OF REFERENCES

- 100: Drive assistance device
- 101: Communication unit
- 102: Vehicle position detecting unit
- 103: Storage unit
- 104: Audio output unit
- 105: Arithmetic and control unit

### BEST MODE FOR CARRYING OUT THE INVENTION

The best mode for carrying out the invention is described based on the following embodiments with reference to the accompanying drawings.

### [EMBODIMENTS]

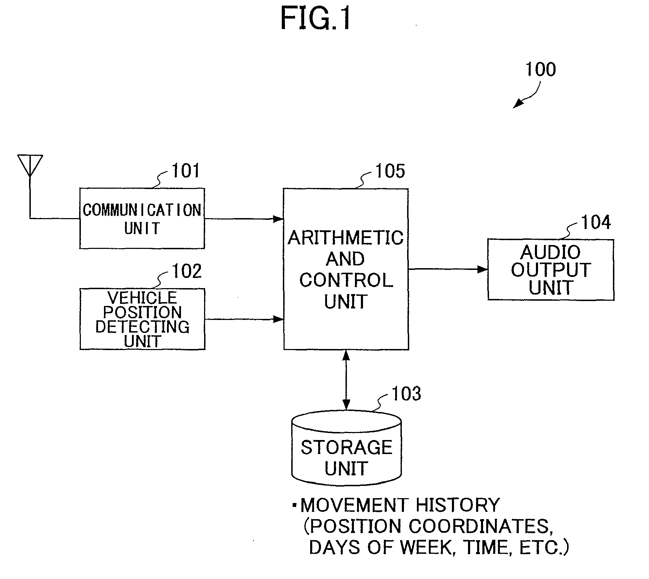

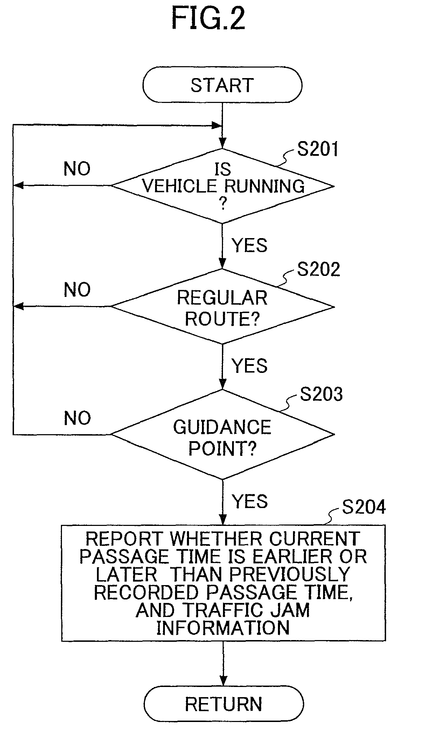

A drive assistance device according to an embodiment of the present invention is described below with reference to FIGs. 1 and 2.

FIG. 1 is a schematic diagram of a drive assistance device 100 according to an embodiment of the present invention.

The drive assistance device 100 includes a communication unit 101 for wirelessly obtaining traffic jam information from an external communication center (not shown). The performance and shape of an antenna of the communication unit 101 and the communication scheme and frequency band used by the communication unit 101 may be determined freely. For example, a radio communication scheme conforming to a communication standard of mobile phones or wireless local area networks (LANs) may be employed for the communication unit 101. The communication connection between the communication unit 101 and the communication center for providing traffic jam information may be established directly or indirectly via vehicle-to-vehicle communications, road-to-vehicle communications, and/or satellite communications.

The drive assistance device 100 also includes a vehicle position detecting unit 102 for detecting the position of the own vehicle using, for example, the Global Positioning System (GPS). The detection accuracy (resolution) of the vehicle position detecting unit 102 is preferably as high (fine) as possible. For example, high-precision GPS such as real time kinematic (RTK) GPS is preferably used for the vehicle position detecting unit 102.

The drive assistance device 100 also includes a storage unit 103 for storing movement history of the vehicle. In this embodiment, the movement history includes, for example, position coordinates of the vehicle, days of the week, and time. The storage unit 103 may be implemented by a storage medium of any type and specification.

The drive assistance device 100 also includes an audio output unit 104. As described later in detail, the audio output unit 104 outputs a voice message for reporting to the driver whether passage time at a given point is earlier or later than previous passage time at the same point and also outputs a voice message for reporting to the driver traffic jam information obtained by the communication unit 101. In this embodiment, the audio output unit 104 includes a given number of speakers. The speakers may be shared with other on-vehicle systems (such as an audio visual system).

Voice messages from the audio output unit 104 may be output such that only the driver can hear or other passengers (in a front passenger seat and/or rear seats) in addition to the driver can also hear.

Further, the drive assistance device 100 includes an arithmetic and control unit 105 for controlling operations of other components of the drive assistance device 100 and performing various calculations such as route calculation. The arithmetic and control unit 105 is, for example, implemented by an electronic control unit (ECU).

In the drive assistance device 100 configured as described above, the arithmetic and control unit 105 continuously records, while the vehicle is running, position coordinates of the vehicle detected by the vehicle position detecting unit 102 in association with the corresponding days of the week and passage time and stores the recorded information as movement history in the storing unit 103.

Also, while the vehicle is running, the arithmetic and control unit 105 compares current passage time at a current position (at a given point) of the vehicle detected by the vehicle position detecting unit 102 with previous passage time at the same position (or the same point) by referring to the movement history stored in the storing unit 103 and reports to the driver whether the current passage time is earlier or later than the previous passage time.

This reporting process is described below in detail with reference to a flowchart shown in FIG. 2.

First, the arithmetic and control unit 105 determines whether the vehicle is running (S201). The arithmetic and control unit 105 determines whether the vehicle is running based on, for example, temporal variation of the vehicle speed and/or temporal variation of the vehicle position detected by the vehicle position detecting unit 102.

If the vehicle is running (YES in S201), the arithmetic and control unit 105 determines whether the vehicle is running a regular route of the user based on the movement history (S202).

In this embodiment, a regular route is determined based on the movement history of a vehicle and indicates a route taken by the vehicle at a predetermined frequency or higher. For example, if a vehicle has run a route a predetermined number of times or more in a certain time range on the same day of the week within a predetermined period, the arithmetic and control unit 105 determines the route as a regular route.

In this example, a vehicle is determined to be running a regular route if the vehicle passes two or more points on the regular route, if the vehicle passes a point on the regular route during a predetermined time range before or after previous passage time, or if the vehicle passes a point on the regular route during a predetermined time range before or after previous passage time on the same day of the week.

If the vehicle is running a regular route (YES in S202), the arithmetic and control unit 105 determines whether the vehicle has reached a guidance point on the regular route (S203).

The guidance point indicates a preset point on a regular route. Any number of guidance points may be set on a regular route. For example, one guidance point may be set at a midpoint between the starting point and the end point of a regular route; three guidance points may be set at a 1/4 waypoint, a midpoint, and a 3/4 waypoint between the starting point and the end point of a regular route; or multiple guidance points may be set at predetermined distance intervals (e.g., at every 5 km) between the starting point and the end point of a regular route.

The guidance points may be set by the user at arbitrarily selected points or at given distance intervals. If a guidance point falls on a place such as an intersection where the driver must concentrate on driving, the guidance point may be moved to a position before or after the original position.

If the vehicle has reached a guidance point on the regular route (YES in S203), the arithmetic and control unit 105 determines whether current passage time at the guidance point is earlier or later than previous passage time at the same guidance point by referring to the movement history stored in the storing unit 103, obtains traffic jam information on a part of the regular route ahead of the guidance point via the communication unit 101, generates a voice message including information indicating whether the current passage time is earlier or later than the previous passage time and the obtained traffic jam information, and outputs the voice message from the audio output unit 104 (S204).

Examples of the voice message are as follows: "You have just passed point XX earlier than usual. There are traffic jams on the road ahead." and "You have just passed point XX later than usual. There is no traffic jam on the road ahead."

This embodiment makes it possible to extract regular routes from the movement history stored in the storing unit 103 and to estimate the user's destination automatically, i.e., without involving user operations, based on the day of the week, the time range, and the regular routes. In other words, this embodiment makes it possible to automatically determine whether current passage time is earlier or later than previous passage time based on a position coordinate, a day of the week, a time range, and a destination.

In this embodiment, if a vehicle position belongs to multiple regular routes, a regular route associated with the same day of the week is preferentially selected; and if there are still multiple regular routes associated with the same day of the week, a regular route associated with a time range close to the current time range is preferentially selected.

As described above, when a driver/user is driving a frequently-used route, a drive assistance device of this embodiment can report to the driver whether current passage time at a given point is earlier or later than previous passage time recorded in the movement history without requiring the driver to set a destination and desired arrival time. Thus, this embodiment makes it possible to improve user convenience.

Also, according to this embodiment, traffic jam information on a part of a regular route ahead of a guidance point is also reported to the driver in addition to information regarding passage time. This allows the driver to appropriately judge whether he or she can arrive a destination on schedule and whether he or she has to hurry.

In the above embodiment, the criteria for extracting regular routes and for determining a corresponding regular route are determined so as to improve the accuracy of estimating a destination and thereby to accurately determine whether current passage time at a given point on the corresponding regular route is earlier or later than usual. However, the present invention is not limited to the above disclosed embodiment.

For example, it is possible to report to the driver whether current passage time at a point is earlier or later than previous passage time even if the point has been recorded only once in the past as long as it is associated with the same day of the week and the same time range.

In the above embodiment, information indicating whether current passage time at a guidance point is earlier or later than usual and traffic jam information on the road ahead of the guidance point are reported by using a voice message. However, the present invention is not limited to the above disclosed embodiment. For example, the information may be provided on a display screen (not shown) as visual information (text information) instead of or in addition to using a voice message.

### INDUSTRIAL APPLICABILITY

The present invention may be applied to a drive assistance device for reporting to a driver whether passage time at a given point is earlier or later than reference time. A drive assistance device according to an embodiment of the present invention may be used for any types of vehicles with various power sources, fuels, exterior designs, weights, sizes, and driving performances.

The present international application claims priority from Japanese Patent Application No. 2006-350268 filed on December 26, 2006, the entire contents of which are hereby incorporated herein by reference.

## Claims

1. A drive assistance device for reporting to a driver whether passage time at a point is earlier or later than reference time, wherein the drive assistance device is configured:
to detect positions of a vehicle;
to record the detected positions in association with the passage time at the respective detected positions;
to determine whether the vehicle is running a regular route; and
if the vehicle is running the regular route, to report to the driver whether current passage time at a given point on the regular route is earlier or later than previous passage time at the given point.

2. The drive assistance device as claimed in claim 1, wherein the drive assistance device is configured to determine a route taken by the vehicle a predetermined number of times or more within a predetermined period as the regular route.

3. The drive assistance device as claimed in claim 2, wherein the drive assistance device is configured to determine the route taken by the vehicle the predetermined number of times or more in a time range on a same day of the week within the predetermined period as the regular route of the day of the week.

4. The drive assistance device as claimed in claim 1, wherein the drive assistance device is configured to obtain traffic jam information on a part of the regular route from the given point to a destination of the regular route and to report the traffic jam information to the driver when the vehicle passes the given point.

5. The drive assistance device as claimed in claim 4, wherein the drive assistance device is configured to determine a route taken by the vehicle a predetermined number of times or more within a predetermined period as the regular route.

6. The drive assistance device as claimed in claim 5, wherein the drive assistance device is configured to determine the route taken by the vehicle the predetermined number of times or more in a time range on a same day of the week within the predetermined period as the regular route of the day of the week.
